# EUROPÄISCHE PATENTSCHRIFT

(11) **EP 2 358 835 B1**
(45) Veröffentlichungstag und Bekanntmachung des Hinweises auf die Patenterteilung: **05.09.2012**
(21) Anmeldenummer: 09801969.8
(22) Anmeldetag: 17.12.2009
(51) Int. Cl.: C09J 123/08

(54) **KONTAKTKLEBSTOFF AUF BASIS VON METALLOCENE-KATALYSIERTEN OLEFIN-C3-C20-OLEFIN COPOLYMEREN**
CONTACT ADHESIVE BASED ON METALLOCENE-CATALYZED OLEFIN-C3-C20-OLEFIN COPOLYMERS
ADHESIF DE CONTACT A BASE DE COPOLYMERES OLEFINE-OLEFINE C3-C20 CATALYSES PAR UN METALLOCENE

(30) Priorität: 19.12.2008 DE 102008063723
(43) Veröffentlichungstag der Anmeldung: 24.08.2011
(73) Patentinhaber: Henkel AG & Co. KGaA, 40589 Düsseldorf (DE)
(72) Erfinder: HEEMANN, Marcus, 41468 Neuss (DE); DE CALMES, Nicolas, F-6200 Dainville (FR); SCHROEDER, Maja, 40882 Ratingen (DE); KOSTYRA, Sebastian, 40789 Monheim (DE); MÖLLER, Thomas, 40593 Düsseldorf (DE); PASQUIER, Thierry, F-69400 Arnas (FR); GILBERT, Christine, F-01390 Mionnay (FR); GIVORD, Roland, F-69400 Gleizé (FR)
(86) Internationale Anmeldenummer: PCT/EP2009/067410
(87) Internationale Veröffentlichungsnummer: WO 2010/070046

(56) Entgegenhaltungen:
- WO-A1-2006/114160
- WO-A1-2009/074450
- GB-A- 1 227 163

## Beschreibung

Die Erfindung betrifft Kontaktklebstoffschichten enthaltend Klebstoffzusammensetzungen hergestellt aus Polymeren auf Basis von Metallocene-katalysierten C₂/C₃-C₂₀-Olefin Copolymeren, die zusammen mit Harzen und weiteren Zusatzstoffen eingesetzt werden können. Weiterhin werden geeignete Schmelzklebstoffzusammensetzungen zur Herstellung von solchen Kontaktklebstoffschichten beschrieben.

Schmelzklebstoffe, die zum Verkleben von verschiedensten Materialien geeignet sind, sind allgemein bekannt. In der EP 0912646 werden Schmelzklebstoffe beschrieben, die aus einem im wesentlichen lineares Copolymer aus Ethylen zusammen mit mindestens einem C₃ bis C₂₀-α-Olefinmonomeren hergestellt werden. Auch in der WO 00/00565 werden Schmelzklebstoffe, die auf Basis von linearen Ethylen-α-Olefin-Copolymeren hergestellt werden. Es werden dort die üblichen Zusatzkomponenten beschrieben, z.B. klebrigmachende Harze, Wachse, weitere unterschiedliche Polymere, Styrolblockcopolymere, Weichmacher oder andere Additive. Als Verwendungszweck wird das Verkleben von Papier und Pappmaterialien aus dem schmelzflüssigen Zustand beschrieben sowie eine Verwendung als haftklebriges Klebeband.

In der WO 2001/46277 werden ebenfalls metallocene-katalysierte C₃-α-OlefinPolymere beschrieben. Diese werden zusammen mit verschiedenen Zusatzstoffen zu Klebstoffen formuliert. Es handelt sich dabei um übliche in der Wärme applizierbare Schmelzklebstoffe, die vor dem endgültigen Erstarren mit einem weiteren Substrat verklebt werden. Eine Anwendung als Kontaktklebstoff wird nicht beschrieben.

In der WO 2006/102150 werden Klebstoffe auf Basis ausgewählter C₂- α-Olefin Copolymeren beschrieben. Diese Copolymere und ihre Herstellung werden beispielsweise auch in der WO 2005/090426 beschrieben. Es werden neben anderen Produkten auch Schmelzklebstoffe beschrieben. Eine Anwendung als Kontaktklebstoffe wird nicht beschrieben.

Haftklebstoffe sind ebenfalls bekannt. In der EP 775177 wird eine wässrige Dispersion als Haftkontaktklebstoff beschrieben, wobei diese Klebstoffdispersion ein Copolymer auf Basis von Vinylestern, Acrylsäureestern, Methacrylsäureestern, ethylenisch ungesättigten Carbonsäuren und ethylenisch ungesättigten Sulfaten oder Sulfonaten enthält. Dabei werden ein Phenolharz und ein thermoplastisches Phenolterpenharz der Masse zugesetzt. Dabei ist es notwendig, dass nach Auftragen des Beschichtungsmaterials zur Erzeugen der Klebstoffschicht die enthaltenen Lösemittelanteile und Wasser aus der Schicht entweichen können.

Weiterhin ist die EP 0547507 bekannt. Diese beschreibt ebenfalls einen wässrigen Kontaktklebstoff, der aus einer Dispersion eines Copolymeren besteht, wobei das Copolymer aus Vinylestern, Acrylaten, Methacrylaten sowie weiteren ethylenisch ungesättigten Monomeren besteht sowie vernetzenden Bestandteilen. Auch in diesem Falle ist es notwendig, zum Erzeugen einer Klebstoffschicht, Wasser und mögliche andere Lösemittel aus dem aufgetragenen Klebstoff zu entfernen.

Ebenso sind Kontaktklebstoffe bekannt, die auf Dispersionen von Naturlatex basieren. Diese Naturlatexdispersionen haben jedoch eine geringe Alterungsstabilität. Es ist bekannt, dass diese Klebstoffe als getrocknete aufgetragene Klebstoffschicht zum Vergilben neigen. Ein weiterer Nachteil solcher Naturlatexdispersionen liegt darin, dass bei einer Applikation auf Papiersubstraten diese Substrate häufig Verunreinigungen enthalten. Insbesondere bei Recyclingrohstoffen sind Spuren von Schwermetallen enthalten. Naturlatexklebstoffe sind gegen solche Verunreinigungen empfindlich, die aufgetragenen Klebstoffschichten zeigen eine erhebliche Verfärbung und sind optisch kaum geeignet.

Nachteile von Kontaktklebstoffschichten aus den bekannten haftklebrigen Zusammensetzungen ist die permanente Klebrigkeit. Deswegen ist es notwendig, die Oberfläche des Kontaktklebstoffs mit einer wieder entfernbaren Schutzfolie abzudecken. Weiterhin ist es bekannt, bestimmte Kontaktklebstoffe vor der Verklebung durch Wärme wieder zu aktivieren. Das erfordert jedoch einen erheblichen aparativen Auswand. Lösemittelhaltige Klebstoffe haben den Nachteil, dass eine hohe Auftragsgeschwindigkeit schwierig zu erreichen ist. Es müssen erst vorhandene Lösemittel oder wässrige Bestandteile aus der Klebstoffschicht verdunsten oder in das Substrat wegschlagen. Dabei kann auch die Substratoberfläche negativ beeinflusst werden.

Bekannte Schmelzklebstoffe ergeben gute Verklebungen. Dabei wird zur Anwendung der Klebstoff aufgeschmolzen, auf das Substrat aufgetragen und noch im flüssigen Zustand verklebt. Im kalten festen Zustand ist der Klebstoff nicht mehr klebrig oder er ist permanent haftklebrig. Kontaktklebstoff im Sinn dieser Erfindung sind jedoch Klebstoffe in Form einer festen Klebstoffschicht, die auf eine Oberfläche aufgetragen sind, und in nicht verklebter Form gelagert werden können. Eine Verklebung wird erst später durch Verpressen gegen ein zweites Substrat erzielt. Dabei werden Klebstoffe als Schicht auf eine Oberfläche aufgetragen, die fest wird. In diesem Zustand ist die Klebstoffschicht lagerfähig ohne ihre Eigenschaften zu verlieren. Die Schicht ist nicht haftklebrig. Es wird dann zur Herstellung der Verklebung ohne weitere Erwärmung auf die Klebstoffschicht ein zweites beschichtetes Substrat durch Druck aufgebracht.

Aufgabe der vorliegenden Erfindung ist es deswegen Kontaktklebstoffschichten zur Verfügung zu stellen, die eine Oberfläche ohne Haftklebstoffeigenschaften aufweisen. Im Kontakt zu einer gleichartig beschichteten Oberfläche sollen diese Flächen unter leichtem Druck verkleben. Eine weitere Aufgabe ist es, einen Klebstoff in dünner Schicht lösemittelfrei aufzutragen und so eine schnelle und umweltfreundliche Herstellung der Klebstoffschicht zu ermöglichen. Eine weitere Aufgabe der vorliegenden Erfindung besteht darin, Klebstoffschichten bereit zustellen, wobei die beschichteten Substrate aufeinander stapelbar sein sollen und nicht untereinander verkleben.

Die Aufgabe wird gelöst durch eine Kontaktklebstoffschicht hergestellt aus einer Klebstoffzusammensetzung enthaltend 10 bis 60 Gew.-% mindestens ein Copolymer auf Basis von Ethylen und mindestens einem C₃ bis C₂₀-Olefin, das durch Metallocene-katalysierte Polymerisation erhältlich ist mit einem MFI-Wert von 1 bis 100 g/10 min, 20 bis 70 Gew.-% mindestens eines klebrigmachenden Harzes, 0 bis 35 Gew.-% eines Weichmachers, 0,01 bis 20 Gew.-% Additive und Zusatzstoffe ausgewählt aus Stabilisatoren, Haftvermittler, Füllstoffe oder Pigmente, Wachsen und/oder anderen Polymeren, wobei die Schichtdicke von 2 bis 150 g/m² beträgt, und die oberfläche der klebstoffschicht nicht oder aus wemig haftklebrig ist.

Ein weiterer Gegenstand der Erfindung ist die Verwendung von Schmelzklebstoffen zur Herstellung von Kontaktklehstoffschichten. Dabei soll der Kontaktklebstoff an der Oberfläche nach Abkühlen bei Raumtemperatur keine Haftklebrigkeit aufweisen. Ein weiterer Gegenstand der Erfindung ist ein Gegenstand, der an einem oder mehreren Bereichen mit einer erfindungsgemäßen Kontaktklebstoffschicht beschichtet ist.

Ein notwendiger Bestandteil des Klebstoffs, der zur Herstellung der Klebstoffschicht geeignet ist, sind Olefin-Copolymere auf Basis von Ethylen und mindestens einem C₃ bis C₂₀-Olefin. Diese Polyolefine werden über Metallocene-Katalyse hergestellt. Bei den Monomeren, die zusätzlich zu Ethylen oder Propylen eingesetzt werden können, handelt es sich um die bekannten mit Ethylen oder Propylen copolymerisierbaren olefinisch ungesättigte Monomere. Insbesondere handelt es sich um lineare oder verzweigte C₄ bis C₂₀-Olefine, die auch als α-Olefine bezeichnet werden, wie Buten, Hexen, Methylpenten, Octen; cyclisch ungesättigte Verbindungen wie Norbonen oder Norbonadien; symmetrisch oder unsymmetrisch substituierte Ethylen-Derivate, wobei als Substituenten C₁ bis C₁₂ -Alkylreste geeignet sind; sowie ggf. ungesättigte Carbonsäuren oder Carbonsäureanhydride. Es kann sich dabei um Homopolymere, Copolymere, Terpolymere handeln, die auch weitere Monomere enthalten können. Im folgenden sollen unter Copolymere auch solche Polymere aus mehr als 2 Monomeren verstanden werden. Dabei soll bevorzugt die Menge der α-Olefin-Comonomere unterhalb 20 % betragen. Eine Ausführungsform der Erfindung verwendet Co- oder Terpolymere auf Basis von Ethylen zusammen C₄ bis C₂₀ -Olefinen. Diese weisen eine niedrige Viskosität in der Schmelze auf.

Eine andere Ausführungsform enthält Copolymere auf Basis von Ethylen und Propylen. Gegebenenfalls ist es möglich, dass auch zusätzliche geringe Anteile an C₄ bis C₂₀ -Olefinen enthalten sind, bevorzugt sind jedoch keine weiteren Monomere enthalten. Diese werden ebenso über Metallocene-Katalysatoren hergestellt. Dabei soll die Menge des Propylen über 60 Gew.-% betragen, insbesondere liegt der Anteil an Propylen über 70 Gew.-%. Wenn noch geringe Anteile an anderen α-Olefinmonomeren enthalten sind, soll die Menge weniger als 5 Gew.-% betragen. Diese Copolymere zeigen eine hohe Teilkristallinität.

Das Molekulargewicht der Copolymere liegt üblicherweise unter 200000 g/mol, insbesondere unter 100000 g/mol, ganz besonders bevorzugt unter 30000 g/mol. Die Untergrenze beträgt 2000 g/mol, bevorzugt 3000 g/mol (zahlenmittleres Molekulargewicht, wie über GPC bestimmbar). Diese Copolymere zeichnen sich dadurch aus, dass sie eine enge Molekulargewichtsverteilung aufweisen. Solche Polymere sind in der Literatur bekannt und können von verschiedenen Herstellern kommerziell erhalten werden.

Eine wichtige Eigenschaft der geeigneten Copolymere ist ihre Viskosität. Da es sich um aufschmelzbare Massen handelt, die als Schmelze aufgetragen werden, sollen die Copolymere eine geringere Viskosität aufweisen. Diese soll gemessen als MFI (melt flow index, gemessen bei 2,16 kg bei 190°C, nach ISO 1133) zwischen 1 bis 100 g/10 min betragen, insbesondere von 10 bis 30 g/10 min. Ist die Viskosität zu hoch, wird die Klebrigkeit der Klebstoffoberfläche negativ beeinflusst. Es kann sich bei den zur Herstellung der erfindungsgemäßen Klebstoffschichten geeigneten Copolymeren um die üblichen statistischen Copolymere handeln. Es ist aber ebenfalls möglich, dass diese Copolymere Blockcopolymere sind. Insbesondere sind in einer Ausführungsform Ethylen/Propylen-Copolymere als Blockcopolymere geeignet. Weiterhin hat es sich als zweckmäßig erwiesen, dass die Glasübergangstemperatur (T₉, gemessen über DTA) der Copolymere unterhalb von 0°C liegt, insbesondere unter -20°C.

Die Klebstoffzusammensetzung soll 10 bis 60 Gew.-% der geeigneten Copolymere enthalten.

Die für den erfindungsgemäß geeigneten Schmelzklebstoff geeigneten Copolymere können einzeln eingesetzt werden, es ist auch möglich, mehrere, insbesondere zwei Copolymere gemeinsam einzusetzen. Dabei ist eine Verträglichkeit der Copolymere gegeben. Beispielsweise können Mischungen aus Ethylen/Propylen-Copolymeren und Ethylen/C₄ bis C₁₂-α-Olefin-Copolymeren eingesetzt werden.

In einer anderen Ausführungsform kann der Klebstoff noch zusätzlich bis 30 Gew.% eines weiteren Olefincopolymeren enthalten. Es kann die oben erwähnte Zusammensetzung aus α-Olefin-Comonomeren aufweisen. Dieses Polymer soll jedoch einen hohen MFI-Wert aufweisen von 400 bis 3000 g/10 min. Die Menge kann bevorzugt 0,5 bis 25 Gew.-% betragen.

Weiterhin enthält ein erfindungsgemäßer Schmelzklebstoff mindestens ein Harz. Das Harz soll die Haftung des Klebstoffs erhöhen. Weiterhin verbessert es die Mischbarkeit und Verträglichkeit der verschiedenen Bestandteile. Es wird im Allgemeinen in einer Menge von 20 bis 70 Gew.-% eingesetzt, insbesondere 25 bis 60 Gew.-%.

Es können im Prinzip die bekannten Harze, wie beispielsweise aromatische, aliphatische oder cycloaliphatische Kohlenwasserstoff-Harze sowie modifizierte oder hydrierte Naturharze eingesetzt werden. Geeignete Harze sind z.B. Terpen-Harze, wie Copolymere des Terpens; modifizierte Naturharze, wie Harzsäuren aus Balsamharz, Tallharz oder Wurzelharz, ggf. auch Hydroabietylalkohol und seine Ester; Acrylsäure-Copolymerisate, wie Styrol-Acrylsäure-Copolymere oder Copolymerisate aus Ethylen, Acrylatestern und Maleinsäureanhydrid; oder Harze auf Basis funktioneller Kohlenwasserstoffharze. Als klebrigmachendes Harz sind auch niedermolekulare Umsetzungsprodukte geeignet, die aus den oben erwähnten Ethylen/Propylen-α-Olefin-Polymeren bestehen. Das Molekulargewicht solcher als Harz geeigneter Olefinpolymere beträgt meist unterhalb von 2000 g/mol.

Es handelt sich dabei insbesondere um Harze, die einen Erweichungspunkt von 80 bis 140°C (ASTM-Methode E28) besitzen. Besonders bevorzugte Harze sind voll oder teilhydrierte Kohlenwasserstoffharze oder Naturharze auf Basis von Kolophonium und Tallharz.

Ein weiterer optionaler Bestandteil sind Weichmacher. Es kann sich dabei um die bekannten Weichmacher auf Basis von Estern oder Polyoxyalkylenpolyolen handeln, insbesondere sind aber medizinische Weißöle, naphtenische, aliphatische oder aromatische Mineralöle, Polypropylen-, Polybuten-, Polyisopren-Oligomere, hydrierte Polyisopren- und/oder Polybutadien-Oligomere geeignet. Hydrierte Weichmacher werden beispielsweise ausgewählt aus der Gruppe der paraffinischen Kohlenwasserstofföle. Insbesondere sind Weißöle, mineralischen Öle, Polyisobutylen und hydrierte Kohlenwasserstoffe geeignet. In der Ausführungsform mit Polybutenoligomeren soll deren Molekulargewicht von 200 bis 5 000 g/mol betragen. Die Weichmacher werden so gewählt, dass der Siedepunkt oberhalb von 200 °C liegt. Damit ist ein Verdampfen aus der Klebstoffschicht vermindert, sodass die Eigenschaften der Klebstoffschicht auch bei längerer Lagerung stabil bleiben. Die Menge der Weichmacher soll zwischen 0 bis 15 Gew.-% betragen. Insbesondere soll der Anteil der Weichmacher zwischen 3 bis 10 % betragen.

Gegebenenfalls können dem Schmelzklebstoff Wachse in Mengen von 0 bis 30 Gew.-% zugegeben werden, bevorzugt von 0,5 bis 15 Gew.-%. Das Wachs kann natürlichen Urspruchs sein, ggf. auch in chemisch modifizierter Form, oder synthetisches Material. Als natürliche Wachse können pflanzliche Wachse, tierische Wachse eingesetzt werden oder Mineralwachse oder petrochemische Wachse. Als chemisch modifizierte Wachse können Hartwachse wie Montanesterwachse, Sarsolwachse usw. eingesetzt werden. Als synthetische Wachse finden Polyalkylenwachse sowie Polyethylenglykolwachse Verwendung. Vorzugsweise werden petrochemische Wachse wie Petrolatum, Paraffinwachse, mikrokristalline Wachse eingesetzt, insbesondere Polyethylen oder Polypropylenwachse. Dabei soll der Tropfpunkt (gemessen nach ASTM D 3954) von 85 bis 160°C betragen, insbesondere zwischen 130 bis 150°C.

Die Schmelzklebstoffe können neben den oben genannten Bestandteilen noch weitere, üblicherweise in Schmelzklebstoffen eingesetzte Bestandteile als Additive enthalten. Hierzu zählen beispielsweise Stabilisatoren, Haftvermittler, Antioxidantien, Füllstoffe und/oder Pigmente oder andere Polymere. Damit können bestimmte Eigenschaften des Klebstoffs, wie z. B. Kohäsion, Stabilität, Haftung oder Festigkeit beeinflusst werden. Die Menge der Additive und Zusatzstoffe soll 0,01 bis 30 Gew.-% betragen, insbesondere von 0,1 bis 15 Gew.-%.

Additive, wie Stabilisatoren oder Haftverrnittler sind dem Fachmann bekannt. Es sind kommerzielle Produkte und der Fachmann kann sie entsprechend den gewünschten Eigenschaften auswählen. Dabei ist darauf zu achten, dass eine Verträglichkeit mit der Polymermischung gegeben ist.

Als optionalen Bestandteil kann der erfindungsgemäße Schmelzklebstoff 0 bis 15 Gew.-% von weiteren, gegenüber den erfindungsgemäß notwendigen EthylenCopolymeren unterschiedlichen Polymeren enthalten, insbesondere zwischen 0,5 bis 10 Gew.-%.

Es kann sich dabei insbesondere um die bekannten kautschukartigen BlockCopolymere handeln, die Styrol enthalten und linear oder radial aufgebaut sind, wie SIS, SBS, SIBS oder vorzugsweise SEBS und SEPS. Weitere Beispiele sind festes Polybuten oder seine Copolymere, Polymethylvinylether, Polymere sowie Polyphenylenoxid und Modifikationen davon. Dabei sollen diese zusätzlichen Polymere bei Raumtemperatur fest sein und sich homogen mit dem Schmelzklebstoff mischen lassen.

In einer anderen Ausführungsform kann der Schmelzklebstoff zusätzlich mindestens ein elastisches Polymer auf Basis von Olefinen und (Meth)acrylsäureestem enthalten, das Carboxylgruppen und/oder Anhydridgruppen aufweist. Die Olefinmonomere können aus den bekannten C₂ bis C₅-Olefinen ausgewählt werden, insbesondere Ethylen oder Propylen. Die (Meth)acrylsäureester werden aus (Meth)Acrylestem mit niedermolekularen C₁ bis C₈-Alkanolen ausgewählt, insbesondere sind Methyl(meth)acrylat, Ethyl(meth)acrylat, Propyl(meth)acrylat, Butyl-(meth)acrylat oder 2-Ethylhexyl(meth)acrylat einzeln oder im Gemisch geeignet. Das Copolymere muss noch Carboxylgruppen und/oder Anhydridgruppen aufweisen. Das kann durch Polymerisation mit entsprechenden funktionellen Monomeren geschehen oder durch nachträgliche Modifikation der Polyolefincopolymere. Beispielsweise ist es möglich, durch Oxidation COOH-Gruppen einzuführen. Weiterhin ist es möglich, durch radikalische Pfropfungsreaktionen, beispielsweise mit Maleinsäureanhydrid, COOH- oder Anhydrid-Gruppen in das Polymere einzuführen.

Dieses Polymer weist üblicherweise ein Molekulargewicht (M_{N}) zwischen 3000 und 50000 g/mol aufweisen, insbesondere 8000 bis 25000 g/mol. Die Menge der COOH-/ Anhydrid-Gruppen soll zwischen 1 bis 100 mg KOH/g betragen, insbesondere zwischen 5 bis 50 mg KOH/g. Ist die Anzahl der Carboxylgruppen hoch, so ist die Verträglichkeit der Bestandteile des Schmelzklebstoffs problematisch. Dabei soll der Erweichungspunkt von 50°C bis 150°C liegen, insbesondere von 90 bis 110°C. Geeignete Carboxylgruppen aufweisende Polymerisate sind kommerziell erhältlich und dem Fachmann bekannt.

Beispielsweise können auch Füllstoffe in Konzentrationen von 0 bis 10 Gew.-% eingesetzt werden, um die anwendungstechnischen und klebetechnischen Eigenschaften verbessern. Das können beispielsweise Farbstoffe oder Füllstoffe wie Titandioxid, Zinkoxid, Gips, Schwerspat, Ton, Kreide und dergleichen sein.

Der erfindungsgemäße Schmelzklebstoff wird durch bekannte Verfahren durch Mischen in der Schmelze hergestellt. Dabei können alle Komponenten gleichzeitig vorgelegt, erwärmt und dann homogenisiert werden, oder es werden zuerst die leichter schmelzenden Komponenten vorgelegt und gemischt, danach die weiteren Harzbestandteile zugegeben. Es ist auch möglich, den Schmelzklebstoff kontinuierlich in einem Extruder herzustellen. Ein geeigneter Schmelzklebstoff ist bei Raumtemperatur (25°C) fest und bis auf Verunreinigungen frei von Lösemitteln.

Der erfindungsgemäß geeignete Schmelzklebstoff soll eine Viskosität von 500 bis 20000 mPas aufweisen, bevorzugt von 300 bis 10000, gemessen bei 160°C (Brookfield, EN ISO 2555, gemessen bei angegebener Temperatur).

Die Schichtdicke des aufgetragenen Klebstoffs beträgt beispielsweise von 2 bis 150 g/m² (ca. 2 bis 150 µm). Insbesondere soll die Schichtdicke weniger als 50 g/m² betragen.

Die erfindungsgemäß geeigneten Klebstoffe haben die Form eines Schmelzklebstoffs. Dabei soll der Klebstoff in der Wärme aufgeschmolzen werden, und er wird danach auch auf ein Substrat aufgebracht. Im Gegensatz zur üblichen Verwendung als Schmelzklebstoff, wird die noch warme Schicht nicht direkt mit einem weiteren Substrat verklebt. Die aufgetragene Schicht soll als Kontaktklebstoff eingesetzt werden. Sie verfestigt sich, zeigt danach an der freien Oberfläche keine adhäsive Wirkung mehr. Sie soll insbesondere keine haftklebrige Oberfläche erzeugen. Die entsprechenden Substrate werden an vorbestimmten Stellen beschichtet, die in der späteren Verwendung des Substrats als Klebfläche benutzt werden sollen.

Zum Verkleben wird das mit einer erfindungsgemäßen Klebstoffschicht beschichtete Substrat mit einem zweiten Substrat gegeneinander gepresst, wobei dieses an der zu verklebenden Stelle ebenfalls eine entsprechende Klebstoffschicht aufweisen muss. Das Verpressen kann unter leichtem Druck geschehen, wie beispielsweise mit der Hand beim Verkleben von Papier ausgeübt werden kann.

Die erfindungsgemäß eine Klebstoffschicht aufweisenden Substrate sind lagerfähig. Auch nach einer längeren Lagerzeit von bis zu einem Jahr ist ein Nachlassen der Klebkraft nicht zu beobachten. Es ist möglich, die Substrate unmittelbar nach der Herstellung und dem Abkühlen zu stapeln. Dabei ist darauf zu achten, dass die erfindungsgemäßen Klebstoffschichten nicht gegeneinander gelagert werden, sondern nur gegen andere Substratschichten. Da die erfindungsgemäße Klebstoffschicht nicht haftklebrig ist, ist ein Verkleben und Verblocken der gestapelten Substrate nicht zu beobachten. Bei einer späteren Verwendung, können diese leicht voneinander getrennt werden.

In einer anderen Ausführungsform weisen die Klebstoffoberflächen noch eine sehr geringe Oberflächenklebrigkeit auf. Auch in diesem Falle ist noch eine Lagerung in Form von Stapeln möglich, die nur leicht aneinander haftenden Substrate sind vor Gebrauch gut voneinander zu trennen.

Es ist prinzipiell auch möglich aber nicht bevorzugt, die erfindungsgemäßen Klebstoffschichten mit einem Trennmaterial abzudecken. Es kann sich dabei um anti-adhäsiv beschichtete Papiere oder Folien handeln. Diese sind vor einer Nutzung von der Klebstoffschicht zu entfernen.

Die Klebstoffschichten sind nicht oder nur wenig haftklebrig. Diese kann als Blockfestigkeit bestimmt werden. Zur Bestimmung der Blockfestigkeit werden beschichtete Substrate mit einer Schichtdicke von 10 bis 20 g/m² als Teststreifen abwechselnd mit unbeschichteten Substraten gestapelt 10 Teststreifen übereinander. Danach wird der Stapel mit 50 g/cm² belastet und 15 Tage bei 90 % rel. Luftfeuchtigkeit / 40°C gelagert. Danach werden die Substrate durch Reißen getrennt, es ist kein Verblocken (Materialriss beim Trennen) festzustellen.

Die erfindungsgemäßen Kontaktklebstoffschichten haben verschiedene Vorteile. Durch das Auftragen des Klebstoffs in Form von Schmelzen ist eine schnelle Verarbeitung möglich. Beispielsweise ist das Auftragen in dünnen Schichten auch in der Schmelze so rasch, dass unmittelbar danach ein Abkühlen der Klebstoffschicht erfolgt. Die Substrate können unmittelbar nach der Herstellung gestapelt werden. Weiterhin ist eine Veränderung des Substrates durch Lösemittel oder Wasser nicht möglich, da die erfindungsgemäße Klebstoffzusammensetzung lösemittelfrei ist.

Durch die geänderte Rohstoffbasis aus Olefincopolymeren ist eine verbesserte optische Stabilität des Klebstoffs gegeben. Dieser wird auch bei längerer Lagerung nicht verfärbt. Weiterhin ist die Farbe des Klebstoffs nicht vom Untergrund abhängig. Auch bei Substraten aus recyclisierten Materialien wie RecyclingPapier, ist keine Verfärbung der Klebstoffschicht zu beobachten.

Die erfindungsgemäßen Kontaktklebstoffschichten können auf verschiedene Substrate aufgetragen werden und diese verkleben, wie Papier, beschichtetes Papier, Pappe, Karton, Folien, Kunststoffe oder metallisierte oder lackierte Oberflächen. Es können auch Kunststoffoberflächen aus Polyethylen, Polypropylen als flexible Folie oder Mehrschichtverbundmaterial, oder feste Substrate, z.B. Flaschen oder Becher, mit den erfindungsgemäßen Klebstoffschichten versehen werden.

Die entsprechenden verklebten Produkte können in vielen Anwendungsgebieten eingesetzt werden, beispielsweise als Etiketten, Mehrschichtfolienmaterial, Folientasche, Briefumschlag, Faltkartonagen, oder Befestigungsbänder in der Hygieneindustrie, Bandagen, medizinische Bandagen oder auf Verpackungen beliebiger Form.

Der Klebstoff erlaubt ein schnelles Applikationsverfahren. Die beschichteten Produkte sind lagerfähig und stapelbar. Es können vorgefertigte und vorbeschichtete Produkte hergestellt werden. Diese werden erst vom Anwender in die endgültige Form gebracht und so verklebt.

Ein weiterer Gegenstand der Erfindung sind vorgefertigte Gegenstände, die mit einer erfindungsgemäßen Klebstoffschicht versehen sind. Dabei wird mit bekannten Verfahren der Gegenstand hergestellt, gegebenenfalls auch als Halbfertigprodukt. Auf die später zu verklebenden Flächen wird eine erfindungsgemäße Klebstoffschicht aufgetragen. Diese ist dann so lagerfähig, sie kann gestapelt werden kann. Die Blockfestigkeit der Klebstoffschichten ist hoch.

Bei einem Stapeln der vorgeformten Gegenstände ist darauf zu achten, dass Bereiche mit einer erfindungsgemäßen Klebstoffschicht nicht gegeneinander gelagert werden. In diesem Fall kann die Klebstofffläche bei Bedarf auch noch mit einer anti-adhäsiv ausgerüsteten Schicht abgedeckt werden.

Durch die nicht klebrige Vorbeschichtung ist eine platzsparende Lagerung möglich, beim Anwender sind die Gegenstände leicht wieder voneinander zu trennen. Die vorgeformten und beschichteten Gegenstände können dann beim Anwender in eine endgültige Form gebracht werden. Dabei sollen dann die vorgesehenen Teilbereiche miteinander verklebt werden. Dabei ist es notwendig, dass beide Flächen mit einer Klebstoffschicht versehen sind.

Die Anwendungsfelder der Kontaktklebstoffschichten sind breit. Es können vorbeschichtete Papierverbunde aus Papiersubstraten hergestellt werden, beispielsweise Briefumschläge. Ein anderes Anwendungsgebiet ist das Beschichten von flexiblen flachen Bändern, die zusammen mit anderen Bändern als Verschluss dienen können. Damit sind bekannte Klettverschlüsse auf einfache Art ersetzbar.

Ein anderes Anwendungsgebiet sind vorbeschichtete Etiketten. Diese können auf andere beschichtete Substrate geklebt werden. Dabei kann es sich um Kunststoff-oder Papier- oder Verbundetiketten handeln. Analog können Kunststofftaschen befestigt werden.

Weiterhin können Klebebänder beispielsweise an Hygieneartikeln entsprechend beschichtet werden. Diese können dann ein oder auch mehrere Male durch Druck verklebt werden.

Es können solche Verklebungen auch als wiederverschließbare Verpackungen eingesetzt werden. Dabei werden die zu verklebenden Flächen maschinell verklebt, eine spätere Trennung durch Bruch der Klebstoffschicht ist möglich. Die Flächen können später durch Druck wieder verschlossen werden. Dabei wird die Haftkraft der verklebten Flächen so gewählt, dass eine Trennung als kohäsives Trennen möglich ist. Durch die beiden erhaltenen Klebstoffschichten ist dann wieder ein Verschluss der beiden Flächen durch Druck möglich.

Die nachfolgenden Beispiele erläutern die Erfindung:

| Beispiel 1: | |
|---|---|
| Vistamaxx VM 1120 , Copolymer C₂ / C₃ | 20 % |
| Licocene PP 6102 | 20 % |
| Regalite S 1100 | 50 % |
| Vistanex PAR 1300 (Exxon) | 9% |
| Irganox 1010 (Fa. Ciba), | 1 % |

| Beispiel 2: | |
|---|---|
| Vistamaxx VM 1120 , Copolymer C₂ / C₃ | 20 % |
| Affinity GA 1900 | 10 % |
| Licocene PP 6102 | 10 % |
| Regalite S 1100 | 50 % |
| Vistanex PAR 1300 ( Exxon ) | 9 % |
| Irganox 1010 (Fa. Ciba), | 1 % |

Die Bestandteile werden bei 160°C so lange gemischt, bis eine homogene Formulierung entsteht.

### Anwendungsbeispiel 3,4:

Auf eine PE-Folie, 50 µm, wird bei 140°C ein Klebstoff nach Beispiel 1 oder 2 mit einem Rakel aufgetragen. Die Menge beträgt 12 g/ m².

Auf ein Papier, 80g/m², wird bei 140°C ein Klebstoff nach Beispiel 1 oder 2 mit einem Rakel aufgetragen. Die Menge beträgt 15 g/ m².

Die beschichteten Substrate können unmittelbar nach dem Herstellen übereinander gestapelt werden.

Jeweils zwei gleichartige oder verschiedene Substrate werden mit der Klebstoffschicht zueinander verklebt und mit einem Gummiroller (2Kg Masse) zweimal angepresst (analog FINAT-Test).

| | |
|---|---|
| PE-Folienverklebung : | Zugkraft > 3 N/cm |
| Papier-Verklebung : | Materialriss (Papierstärke 80 g/m²) |

Die Substrate werden abwechselnd mit unbeschichteten Substraten gestapelt (15 Schichten). Danach wird der Test auf Verblocken durchgeführt (15 Tage, 40°C, 90% Feuchtigkeit). Ein Verkleben der Substrate untereinander wird nicht beobachtet.

| | | |
|---|---|---|
| Vistamaxx VM 1120 , Copolymer C₂ / C₃ | | MFI 21 g |
| Licocene PP 6102 | Wachs | Tropfpunkt 145°C |
| Regalite S 1100 (Fa. Eastman) | Harz | |
| Vistanex PAR 1300 (Exxon) | Polyisobutylen | 1300 g/mol |
| Irganox 1010 (Fa. Ciba) | Stabilisator | |

## Patentansprüche

1. Kontaktklebstoffschicht enthaltend als Klebstoffzusammensetzung
a) 10 bis 60 Gew.-% mindestens ein Copolymer auf Basis von Ethylen und mindestens einem C₃ bis C₂₀-Olefin, das durch Metallocene-katalysierte Polymerisation erhältlich ist mit einem MFI-Wert von 1 bis 100 g/10 min, b) 20 bis 70 Gew.-% mindestens eines klebrigmachenden Harzes,
c) 0 bis 35 Gew.-% eines Weichmachers
d) 0,01 bis 20 Gew.-% Additive und Zusatzstoffe ausgewählt aus Stabilisatoren, Haftvermittler, Füllstoffe oder Pigmente und/oder anderen Polymeren, mit einer Schichtdicke von 2 bis 150 g/m², wobei die Oberfläche der Klebstoffschicht nicht oder nur wenig haftklebrig ist.

2. Kontaktklebstoffschicht nach Anspruch 1, **dadurch gekennzeichnet, dass** zusätzlich 0,5 bis 30 Gew.% eines Copolymeren auf Basis von Ethylen und C₃ bis C₂₀-Olefinen, das durch Metallocene-katalysierte Polymerisation erhältlich ist, mit einem MFI-Wert von 400 bis 3000 g/10 min, sowie 0,5 bis 30 Gew.-% eines paraffinischen, mikrokristallinen Polyethylen-und/oder Polypropylen-Wachses enthalten sind.

3. Kontaktklebstoffschicht nach Anspruch 1 oder 2, **dadurch gekennzeichnet, dass** 0,5 bis 15 Gew.-% eines Weichmachers ausgewählt aus Polyisobutylen, napthenischen, aliphatischen oder aromatischen Mineralölen enthalten sind sowie 0,1 bis 3 Gew.-% an Stabilisatoren, wobei die Summe aller Bestandteile 100 % beträgt.

4. Kontaktklebstoffschicht nach einem der Ansprüche 1 bis 3, **dadurch gekennzeichnet, dass** als Copolymer mit einem MFI-Wert unter 100 g/10 min ein Polymer auf Basis von Ethylen/Propylen mit hoher Kristallinität enthalten ist.

5. Kontaktklebstoffschicht nach einem der Ansprüche 2 bis 4, **dadurch gekennzeichnet, dass** das Wachs einen Tropfpunkt von 130 bis 150°C aufweist.

6. Kontaktklebstoffschicht nach einem der Ansprüche 1 bis 5, **dadurch gekennzeichnet, dass** das als Additive 1 bis 15 Gew.-% von zusätzlichen Polymeren enthalten sind, ausgewählt aus Styrol-Blockcopolymeren oder MSA- modifizierten Ethylen/Acrylatcopolymeren.

7. Kontaktklebstoffschicht nach einem der Ansprüche 1 bis 6 hergestellt aus einem Schmelzklebstoff mit einer Viskosität bei 160°C von 500 bis 20000 mPas.

8. Kontaktklebstoffschicht nach einem der Ansprüche 3 bis 7, **dadurch gekennzeichnet, dass** als Polyisobutylen Oligomere mit einem Molekulargewicht von 200 bis 5.000 g/mol eingesetzt werden.

9. Verwendung einer Kontaktklebstoffschicht nach einem der Ansprüche 1 bis 8 als in einem begrenzten Bereich aufgetragene Beschichtung zum Verkleben von Papier, Karton oder Kunststoff.

10. Verwendung nach Anspruch 9 zum Verkleben von Hygieneartikeln.

11. Verwendung nach einem der Ansprüche 9 bis 10 als
Oberflächenbeschichtung zum Verkleben von folienförmigen Materialen.

12. Verwendung nach einem der Ansprüche 9 bis 11, **dadurch gekennzeichnet, dass** beide zu verklebenden Flächen mit einer Schicht des Kontaktklebstoffs beschichtet sind.

13. Gegenstand, der eine oder mehrere zu verklebende Flächen aufweist, die mit einer Schicht eines Klebstoffs nach Anspruch 1 bis 8 beschichtet sind.

14. Gegenstand nach Anspruch 13, **dadurch gekennzeichnet, dass** die Oberfläche der Klebstoffschicht nicht haftklebrig ist und mit nicht beschichteten Teilen des Substrats nicht dauerhaft verklebt.

15. Gegenstand nach einem der Ansprüche 13 oder 14, **dadurch gekennzeichnet, dass** die Gegenstände aufeinander stapelbar sind.

## Claims

1. A contact adhesive layer containing as adhesive composition
a) 10 to 60 wt.% of at least one copolymer based on ethylene and at least one C₃ to C₂₀ olefin which is obtainable by metallocene-catalysed polymerisation with an MFI value of 1 to 100 g/10 min,
b) 20 to 70 wt.% of at least one tackifying resin,
c) 0 to 35 wt.% of a plasticiser,
d) 0.01 to 20 wt.% of additives and auxiliary substances selected from stabilisers, adhesion promoters, fillers or pigments and/or other polymers, with a layer thickness of 2 to 150 g/m², wherein the surface of the adhesive layer is not or is only slightly pressure-sensitively adhesive.

2. A contact adhesive layer according to claim 1, **characterised in that** it additionally contains 0.5 to 30 wt.% of a copolymer based on ethylene and C₃ to C₂₀ olefins which is obtainable by metallocene-catalysed polymerisation with an MFI value of 400 to 3000 g/10 min, as well as 0.5 to 30 wt.% of a paraffinic, microcrystalline polyethylene and/or polypropylene wax.

3. A contact adhesive layer according to claim 1 or claim 2, **characterised in that** it contains 0.5 to 15 wt.% of a plasticiser selected from polyisobutylene, naphthenic, aliphatic or aromatic mineral oils, as well as 0.1 to 3 wt.% of stabilisers, the sum of all the components amounting to 100%.

4. A contact adhesive layer according to any one of claims 1 to 3, **characterised in that** it contains a polymer based on ethylene/propylene with elevated crystallinity as the copolymer with an MFI value of below 100 g/10 min.

5. A contact adhesive layer according to any one of claims 2 to 4, **characterised in that** the wax exhibits a dropping point of 130 to 150°C.

6. A contact adhesive layer according to any one of claims 1 to 5, **characterised in that** it contains 1 to 15 wt.% of additional polymers which are selected from styrene block copolymers or maleic anhydride modified ethylene/acrylate copolymers as additives.

7. A contact adhesive layer according to any one of claims 1 to 6 produced from a hot-melt adhesive with a viscosity at 160°C of 500 to 20,000 mPa.s.

8. A contact adhesive layer according to any one of claims 3 to 7, **characterised in that** oligomers with a molecular weight of 200 to 5000 g/mol are used as the polyisobutylene.

9. Use of a contact adhesive layer according to any one of claims 1 to 8 as a coating applied in a limited zone for adhesively bonding paper, paperboard or plastics.

10. Use according to claim 9 for adhesively bonding hygiene articles.

11. Use according to either one of claims 9 to 10 as a surface coating for adhesively bonding materials in film form.

12. Use according to any one of claims 9 to 11, **characterised in that** both of the areas to be adhesively bonded are coated with a layer of the contact adhesive.

13. An article which comprises one or more areas to be adhesively bonded which are coated with a layer of an adhesive according to claims 1 to 8.

14. An article according to claim 13, **characterised in that** the surface of the adhesive layer is not pressure-sensitively adhesive and does not permanently adhesively bond with uncoated parts of the substrate.

15. An article according to either of claims 13 or 14, **characterised in that** the objects may be stacked on one another.

## Revendications

1. Couche d'adhésif de contact, contenant comme composition adhésive
a) 10 à 60% en poids d'au moins un copolymère à base d'éthylène et d'au moins une C₃-C₂₀-oléfine, qui peut être obtenu par polymérisation catalysée par un métallocène, présentant une valeur MFI de 1 à 100 g/10 min,
b) 20 à 70% en poids d'au moins une résine poisseuse,
c) 0 à 35% en poids d'un plastifiant,
d) 0,01 à 20% en poids d'additifs et d'adjuvants choisis parmi les stabilisateurs, les promoteurs d'adhérence, les charges ou les pigments et/ou d'autres polymères,
en une épaisseur de couche de 2 à 150 g/m², la surface de la couche adhésive n'étant que peu ou pas auto-adhésive.

2. Couche d'adhésif de contact selon la revendication 1, **caractérisée en ce qu'**elle contient en outre 0,5 à 30% en poids d'un copolymère à base d'éthylène et de C₃-C₂₀-oléfines, qui peut être obtenu par polymérisation catalysée par un métallocène, présentant une valeur MFI de 400 à 3000 g/10 min, ainsi que 0,5 à 30% en poids d'une cire paraffinique, microcristalline, de polyéthylène et/ou de polypropylène.

3. Couche d'adhésif de contact selon la revendication 1 ou 2, **caractérisée en ce qu'**elle contient 0,5 à 15% en poids d'un plastifiant choisi parmi le polyisobutylène, les huiles minérales naphténiques, aliphatiques ou aromatiques ainsi que 0,1 à 3% en poids de stabilisateurs, la somme de tous les constituants valant 100%.

4. Couche d'adhésif de contact selon l'une quelconque des revendications 1 à 3, **caractérisée en ce qu'**elle contient, comme copolymère présentant une valeur MFI inférieure à 100 g/10 min, un polymère à base d'éthylène/propylène d'une cristallinité élevée.

5. Couche d'adhésif de contact selon l'une quelconque des revendications 2 à 4, **caractérisée en ce que** la cire présente un point de goutte de 130 à 150°C.

6. Couche d'adhésif de contact selon l'une quelconque des revendications 1 à 5, **caractérisée en ce qu'**elle contient comme additifs 1 à 15% en poids de polymères supplémentaires, choisis parmi les copolymères séquencés de styrène ou les copolymères d'éthylène/acrylate modifiés par de l'anhydride de l'acide maléique.

7. Couche d'adhésif de contact selon l'une quelconque des revendications 1 à 6 préparée à partir d'un adhésif en masse fondue présentant une viscosité à 160°C de 500 à 20 000 mPa.s.

8. Couche d'adhésif de contact selon l'une quelconque des revendications 3 à 7, **caractérisée en ce qu'**on utilise, comme polyisobutylène, des oligomères présentant un poids moléculaire de 200 à 5000 g/mole.

9. Utilisation d'une couche d'adhésif de contact selon l'une quelconque des revendications 1 à 8 comme revêtement appliqué dans une zone limitée pour le collage de papier, de carton ou de matériau synthétique.

10. Utilisation selon la revendication 9 pour le collage d'articles hygiéniques.

11. utilisation selon l'une quelconque des revendications 9 à 10 comme revêtement de surface pour le collage de matériaux en forme de feuille.

12. Utilisation selon l'une quelconque des revendications 9 à 11, **caractérisée en ce que** les deux surfaces à coller sont revêtues d'une couche de l'adhésif de contact.

13. Objet présentant une ou plusieurs surfaces à coller qui sont revêtues d'une couche d'un adhésif selon la revendication 1 à 8.

14. Objet selon la revendication 13, **caractérisé en ce que** la surface de la couche adhésive n'est pas auto-adhésive et ne colle pas de manière durable avec les parties non revêtues du substrat.

15. Objet selon l'une quelconque des revendications 13 ou 14, **caractérisé en ce que** les objets peuvent être empilés les uns sur les autres.
